# FASCICULE DE BREVET EUROPEEN

(11) **EP 2 876 565 B1**
(45) Date de publication et mention de la délivrance du brevet: **30.12.2020**
(21) Numéro de dépôt: 14194899.2
(22) Date de dépôt: 26.11.2014
(51) Int. Cl.: G06F 16/64, G06F 16/904, G06F 16/28, G06F 16/74, G06F 16/44

(54) **TRAITEMENT DE DONNÉES RELATIVES À DES ENTITÉS**
VERARBEITUNGSSYSTEM VON OBJEKTBEZOGENEN DATEN
PROCESSING OF DATA RELATING TO OBJECTS

(30) Priorité: 26.11.2013 FR 1361639
(43) Date de publication de la demande: 27.05.2015
(73) Titulaire: ORANGE, 75015 Paris (FR)
(72) Inventeur: Delpic, Sébastien, 14000 Caen (FR)

(56) Documents cités:
- EP-A1- 1 962 207
- EP-A1- 2 466 443
- US-A1- 2006 106 847
- US-A1- 2008 077 875
- US-B1- 6 285 367

## Description

La présente invention concerne la recherche d'entités parmi une pluralité d'entités en fonction de critères prédéfinis afin par exemple d'obtenir des données associées à des entités.

De telles entités sont, à titre d'exemple et sans aucune limitation, des personnes, par exemple des artistes, des chanteurs..., des noms de fichiers, des contenus...

Des données associées à une entité sont par exemple des contenus multimédias, des contenus audio et/ou vidéo, des contenus textuels, des contacts d'un carnet d'adresses, des fichiers de données, des instructions d'un programme informatique (pour l'exécution d'une application, d'un jeu, ou autres),etc.

Un tel dispositif informatique peut être typiquement, à titre d'exemple, un équipement de visualisation doté de fonctionnalités tactiles tel qu'un écran PC, une tablette PC, un téléphone mobile, ou autres. Par ailleurs, le dispositif peut ne pas inclure d'écran destiné à l'affichage de l'interface. Tel peut être le cas par exemple d'un terminal de type Set-Top-Box, connecté en revanche à un écran, par exemple d'un poste de télévision, susceptible d'afficher une interface graphique à disposition d'un utilisateur, lequel peut actionner par exemple des boutons d'une télécommande.

Le résultat de la recherche est présenté à un utilisateur sous la forme d'une interface graphique affichée sur un écran d'un dispositif informatique.

La mise en œuvre d'une interface sur un écran consiste alors à afficher des vignettes correspondant respectivement à des entités. On entend par « vignette » toute représentation possible d'une entité, telle que par exemple et à titre non limitatif une imagette représentative d'une personne (photo, nom), d'un contenu audio et/ou vidéo (pochette de disque, affiche de film, ou autre), un icone d'un programme, un logo, une forme quelconque contenant du texte, etc.

Le produit TuneGlue (http://audiomap.tuneglue.net/) divulgue l'affichage d'une pluralité de vignettes. Une vignette centrale représente à un artiste d'origine et les autres vignettes représentent des artistes / chansons liés à cet artiste d'origine.

Plus précisément, ce site Web permet, suite à la saisie par un utilisateur au moyen d'une interface graphique d'un nom d'artiste, l'affichage de cinq vignettes représentant respectivement des artistes proches de l'artiste choisi par l'utilisateur. Ces vignettes sont reliées directement à l'artiste choisi.

Une fonction supplémentaire permet de sélectionner une des vignettes affichées et cette sélection provoque l'affichage supplémentaire de cinq vignettes représentant des artistes proches de l'artiste associé à la vignette sélectionnée. Ces vignettes sont reliées directement à l'artiste dont la vignette a été sélectionnée.

L'opération peut ensuite être renouvelée une ou plusieurs pour un ou plusieurs autres artistes.

L'opération peut ensuite être renouvelée une ou plusieurs pour un ou plusieurs autres artistes.

La méthode nécessite pour l'utilisateur de cliquer successivement sur la vignette représentant chaque artiste pour avoir la cartographie complète.

De plus, le nombre d'artistes affichés en liaison avec un artiste sélectionné est figé.

Le document EP2466443A1 présente un procédé de traitement de données de vignettes pour un affichage en perspective en au moins deux plans. Le procédé permet d'afficher des vigenttes par groupes formés selon un critère choisi

Le document US 2006/0106847 présente un procédé et un appareil permettant de sélectionner et de afficher des données ou des ensembles de documents associés dans un système de visualisation qui permet aux utilisateurs de sélectionner parmi différents affichages et de se déplacer entre eux en sélectionnant un ou plusieurs attributs des données à être représentés comme les nœuds et les liens du réseau.

Un des buts de l'invention est de remédier à des insuffisances/inconvénients de l'état de la technique et/ou d'y apporter des améliorations.

L'invention vient améliorer la situation.

L'invention se rapporte à un procédé de traitement de données, mis en œuvre par un dispositif informatique comportant une étape de génération d'un signal de commande d'affichage sur un écran d'une interface graphique comprenant un graphe composé de liens et de nœuds matérialisés par des vignettes, chaque vignette représentant une entité, ledit graphe contient une première vignette représentant une première entité,
et une étape de sélection d'un ensemble d'entités en fonction d'au moins un deuxième critère de sélection, parmi une pluralité d'entités répondant à un premier critère de sélection relativement à la première entité,
la première vignette dudit graphe étant reliée dans ledit graphe directement à une ou plusieurs deuxièmes vignettes représentant chacune une deuxième entité dudit ensemble d'entités.

Le deuxième critère est déterminé à partir de caractéristiques de la pluralité d'entités répondant au premier critère.

Le nombre de deuxièmes vignettes dépend dudit au moins un deuxième critère.

Le nombre de dites deuxièmes vignettes est fonction d'une valeur de seuil courante déterminée à partir de la pluralité d'entités.

Une valeur de seuil est déterminée en fonction d'une pluralité d'entités répondant à un premier critère de sélection relativement à une première entité.

Ainsi, le nombre de deuxièmes vignettes affichées varie en fonction de la première entité et du premier critère.

Selon un mode de réalisation particulier du procédé, ledit graphe contient une pluralité de vignettes réparties sur deux niveaux, la première vignette appartenant à un premier niveau et les deuxièmes vignettes étant réparties sur un deuxième niveau, et le procédé comporte en outre la sélection de N ensembles d'entités, N étant supérieur ou égal à un,
la sélection d'un deuxième ensemble d'entités étant effectuée en fonction dudit au moins un deuxième critère, parmi des entités d'au moins un groupe d'entités, les entités d'un dit groupe
d'entités répondant audit au moins un premier critère de sélection relativement à une entité dudit ensemble,
la sélection d'un Kième ensemble d'entités (k>2) est effectuée en fonction dudit au moins un deuxième critère, parmi des entités d'au moins un groupe d'entités, les entités d'un dit groupe
une vignette du niveau (k-1) dudit graphe est reliée dans ledit graphe directement à une ou plusieurs vignettes de niveau K représentant chacune une entité dudit Kième ensemble d'entités, le nombre de dites vignettes de niveau K étant fonction de ladite valeur de seuil.

Ceci permet l'obtention d'une cartographie complète sans nécessité de sélections successives de la part de l'utilisateur.

Le procédé permet ainsi l'affichage d'un nombre de vignettes différent d'un niveau à l'autre.

Selon un mode de réalisation particulier du procédé de traitement, la sélection d'un Kème ensemble comprend en outre une étape de test pour déterminer si la somme du nombre NV de vignettes d'ordre strictement inférieur à K dudit graphe et du nombre NK d'entités du Kème ensemble est supérieure à une valeur maximum prédéfinie NVM, et dans le cas où la dite somme est supérieure à ladite valeur maximum NVM, une étape de détermination d'un ensemble réduit d'entités comprenant (NBM-NV) entités sélectionnées parmi les NK entités du Kème ensemble, chaque vignette de niveau K représentant une entité dudit ensemble réduit.

La limitation du nombre de vignettes affichées permet d'éviter le chevauchement de vignettes affichées et d'obtenir une interface lisible par un utilisateur.

Le nombre de niveaux dépend ainsi du nombre de vignettes affichées pour chaque niveau de représentation.

Seul, le nombre de vignettes affichées pour le dernier niveau est éventuellement réduit.

Selon un mode de réalisation particulier du procédé de traitement de données, ladite valeur de seuil courante est une valeur d'une grandeur prédéfinie, au moins une valeur de ladite grandeur est associée à au moins une entité et ledit au moins un deuxième critère est un critère de comparaison entre une valeur de ladite grandeur associée à une entité et ladite valeur de seuil courante.

Selon un mode de réalisation particulier du procédé de traitement de données, la valeur de seuil courante est sélectionnée parmi plusieurs valeurs de seuil déterminées en fonction de ladite pluralité d'entités.

Ceci permet l'obtention de plusieurs graphes pour une même première entité.

Selon un mode de réalisation particulier du procédé de traitement de données, l'interface graphique contient une icône comprenant au moins deux zones sélectionnables par un utilisateur, chaque zone étant associée à une valeur de seuil, et suite à la sélection par l'utilisateur d'une desdites au moins deux zones de l'icône, la valeur de seuil courante VSC est la valeur de seuil associée à la zone sélectionnée.

L'affichage de zones sélectionnables est un moyen simple pour l'utilisateur pour choisir une des valeurs de seuil.

Selon un mode de réalisation particulier du procédé de traitement de données, l'étape de sélection d'une dite zone est suivie d'une étape d'affichage d'un graphe modifié contenant un nombre modifié de dites deuxièmes vignettes.

En fonction de la zone sélectionnée par l'utilisateur, le nombre de vignettes affichées pour chaque niveau sera différent. L'utilisateur pourra ainsi naviguer d'un graphe comportant un nombre important de vignettes affichées par niveau et un nombre limité de niveaux et un graphe comportant, un nombre plus faible de vignettes pour chaque niveau et un nombre de niveaux plus important.

Selon un mode de réalisation particulier du procédé de traitement de données, le nombre de zones et la valeur de seuil associée à chaque zone sont déterminés à partir de ladite pluralité.

Ceci permet d'obtenir un nombre de zones et des valeurs de zones adaptés à la ou aux premières entités considérées et plus particulièrement à la recherche d'entités effectuée par un utilisateur. Ceci permet d'éviter à un utilisateur d'obtenir des graphes contenant des niveaux de représentation ne contenant pas d'entités et lui évite de saisir plusieurs valeurs de seuil avant d'obtenir un graphe adapté à sa recherche. Ainsi, l'obtention d'un graphe est facilitée.

Selon une caractéristique particulière du procédé de traitement de données, une pluralité de classes étant prédéfinie pour une grandeur prédéfinie, un rang étant associé à chaque classe, chaque entité de la pluralité d'entités est associée à une des classes en fonction de la valeur de la grandeur associée à ladite entité et le nombre de niveaux de précision dépend du rang le plus élevé parmi les rangs des classes pour lesquelles au moins une entité a été associée.

Selon un mode de réalisation particulier du procédé de traitement de données, le nombre de zones est le nombre de classes pour lesquelles au moins une entité de la pluralité a été associée

Selon un mode de réalisation particulier du procédé de traitement de données, le graphe comprend au moins deux premières vignettes représentant chacune une première entité et le procédé comprend une étape d'obtention d'un ensemble d'entités de rang 1 sélectionnées en fonction dudit au moins un deuxième critère de sélection parmi des entités d'au moins deux groupes d'entités, les entités d'un dit groupe répondant audit au moins un premier critère de sélection relativement à une des premières entités,
chaque première vignette dudit graphe est reliée dans ledit graphe directement à une ou plusieurs deuxièmes vignettes représentant chacune une entité dudit ensemble d'entités de rang 1, le nombre de dites deuxièmes vignettes étant fonction d'une valeur de seuil déterminée à partir d'entités desdits au moins deux groupes d'entités.

Selon un mode de réalisation particulier du procédé de traitement de données, le graphe contient deux premières entités et une première des deux premières entités est une entité d'un ensemble d'entités sélectionnées en fonction dudit au moins un deuxième critère de sélection parmi une pluralité d'entités répondant audit premier critère de sélection relativement à une deuxième des premières entités.

Selon un mode de réalisation particulier du procédé de traitement de données, les premières vignettes forment une suite ordonnée d'au moins trois vignettes parmi lesquelles la première vignette de la suite représentant une entité de départ, la dernière vignette de la suite représentant une entité d'arrivée, et au moins une vignette intermédiaire représentant une entité intermédiaire, une vignette intermédiaire de la suite étant reliée à une vignette précédente et à une vignette suivante, la vignette précédente représentant l'entité de départ ou une entité intermédiaire précédente et la vignette suivante représentant l'entité d'arrivée ou une entité intermédiaire suivante, et une entité intermédiaire est une entité d'un ensemble ENp d'entités obtenu par sélections successives en fonction dudit au moins un deuxième critère de sélection parmi une pluralité d'entités répondant audit premier critère de sélection relativement à l'entité de départ et/ou une entité d'un ensemble ENq d'entités obtenu par sélections successives en fonction dudit au moins un deuxième critère de sélection parmi une pluralité d'entités répondant audit premier critère de sélection relativement à l'entité d'arrivée.

Selon un mode de réalisation particulier du procédé de traitement de données, les entités sont des artistes et le procédé comporte en outre une étape de construction d'une liste de morceaux de musique, ladite liste comportant des morceaux associés respectivement à chaque entité de la suite.

L'invention se rapporte également à un dispositif comportant des moyens de génération d'un signal de commande d'affichage sur un écran d'une interface graphique comprenant un graphe composé de liens et de nœuds matérialisés par des vignettes, chaque vignette représentant une entité, ledit graphe contient une première vignette représentant une première entité.

Le dispositif comporte un module de sélection d'un ensemble d'entités en fonction d'au moins un deuxième critère de sélection, parmi une pluralité d'entités répondant à un premier critère de sélection relativement à la première entité, et la première vignette dudit graphe est reliée dans ledit graphe directement à une ou plusieurs deuxièmes vignettes représentant chacune une deuxième entité dudit ensemble d'entités, le nombre de dites deuxièmes vignettes étant fonction d'une valeur de seuil courante déterminée à partir de la pluralité d'entités.

L'invention se rapporte encore à un programme informatique comportant des instructions de code pour la mise en œuvre des étapes d'un procédé de traitement de données tel que décrit précédemment, lorsqu'elles sont exécutées par un processeur.

Enfin l'invention se rapporte à un support de stockage, lisible par un processeur, intégré ou non au dispositif de traitement, éventuellement amovible, mémorisant un programme informatique mettant en œuvre un procédé de traitement tel que décrit précédemment.

D'autres caractéristiques et avantages de l'invention apparaîtront plus clairement à la lecture de la description suivante, donnée uniquement à titre d'exemple non limitatif, et faite en référence aux dessins annexés, sur lesquels :
- la figure 1 illustre sous forme d'organigramme un procédé de traitement de données selon un premier mode de réalisation de l'invention,
- la figure 2 illustre un premier exemple de graphe,
- la figure 3 illustre un deuxième exemple de graphe,
- la figure 4 illustre un troisième exemple de graphe,
- la figure 5 illustre sous forme d'organigramme un procédé de traitement de données selon un deuxième mode de réalisation de l'invention,
- la figure 6 illustre un quatrième exemple de graphe,
- la figure 7 est un cinquième exemple de graphe,
- la figure 8 illustre sous forme d'organigramme des étapes de détermination de niveaux de précision selon un mode de réalisation,
- la figure 9 représente un tableau contenant des exemples de valeurs associées à des classes,
- la figure 10 est un schéma illustrant un dispositif apte à réaliser les étapes d'un procédé de traitement de données selon un mode de réalisation.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'un équipement (terminal, serveur, passerelle, set-top-box, routeur, ...) et est susceptible d'accéder aux ressources matérielles de cet équipement (mémoires, supports d'enregistrement, bus de communication, cartes électroniques d'entrées/sorties, interfaces utilisateur, ...).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

Dans les modes de réalisation décrits, chaque entité est un artiste.

Un ou plusieurs contenus vocaux, par exemple des chansons chantées par l'artiste, sont associées à chaque artiste.

Un nombre de fans NFi est également associé à chaque artiste Ai. Le nombre de fans représente une grandeur, c'est-à-dire une caractéristique. Un nombre de fans NFi associé à un artiste Ai représente une valeur de cette grandeur.

Un nombre de fans NFi et un ou plusieurs identifiants de chanson, par exemple un titre, sont enregistrées dans une mémoire en association avec un identifiant de chaque artiste Ai.

D'autres données peuvent également être enregistrées en association avec un identifiant d'artiste.

Un premier critère de sélection CR1 et un deuxième critère de sélection CR2 sont prédéfinis.

L'application d'un premier critère de sélection à un ou plusieurs entités permet l'obtention d'une pluralité d'entités.

L'application d'un deuxième critère de sélection à une pluralité d'entités permet de déterminer un ensemble d'entités sélectionnées parmi cette pluralité d'entités.

Le deuxième critère est déterminé à partir de caractéristiques de cette pluralité d'entités.

Le premier critère CR1 est un critère permettant de sélectionner un ou plusieurs entités relativement à une ou plusieurs entités

Le premier critère CR1 est par exemple un critère de proximité entre deux entités. La proximité entre deux entités est par exemple définie en fonction d'un genre musical associé à chaque artiste.

Les relations de proximité entre artistes sont considérées comme prédéfinies. Par exemple, une ou plusieurs valeurs représentant un genre musical, par exemple classique, variété internationale, chanson française, jazz... sont associées lors d'une étape préalable à chaque artiste.

L'application du premier critère CR1 à une entité, c'est-à-dire un artiste, permet de déterminer une pluralité d'artistes de même gente musical ou d'un genre musical proche.

Par exemple, l'application du premier critère CR1 à un artiste, pour lequel la valeur « chanson française » a été associée, permet de déterminer une pluralité d'artistes pour lesquels la valeur « chanson française a également été associée.

Le premier critère CR1 est relatif à une relation entre deux entités.

Le deuxième critère CR2 est un critère de comparaison d'une valeur d'une grandeur prédéterminée, par exemple un nombre de fans, avec une valeur de seuil courante VSC.

Une grandeur représente une caractéristique.

Par exemple, le deuxième critère CR2 permet de sélectionner parmi un ensemble d'entités, toutes les entités pour lesquelles le nombre de fans est supérieur à une valeur de seuil.

Comme il sera décrit plus précisément dans la suite de la description, la valeur de seuil est une valeur déterminée en fonction d'une pluralité d'entités répondant au premier critère relativement au moins une première entité.

A titre d'alternative, d'autres premier et deuxième critères sont appliqués en plus ou en remplacement du premier critère CR1 et du deuxième critère CR2 décrits ici à titre d'exemple.

Un autre exemple de premier critère est par exemple « nombre de fans inférieur à celui de l'entité à laquelle le premier critère est appliqué ».

Un autre exemple de deuxième critère est par exemple « nombre de disque vendus supérieur à une valeur de seuil ».

A titre d'alternative, le deuxième critère comporte deux critères reliés par des opérateurs booléen, par exemple « (nombre de fans supérieur à une première valeur de seuil) OU (nombre de disques vendus inférieur à une deuxième valeur de seuil) ».

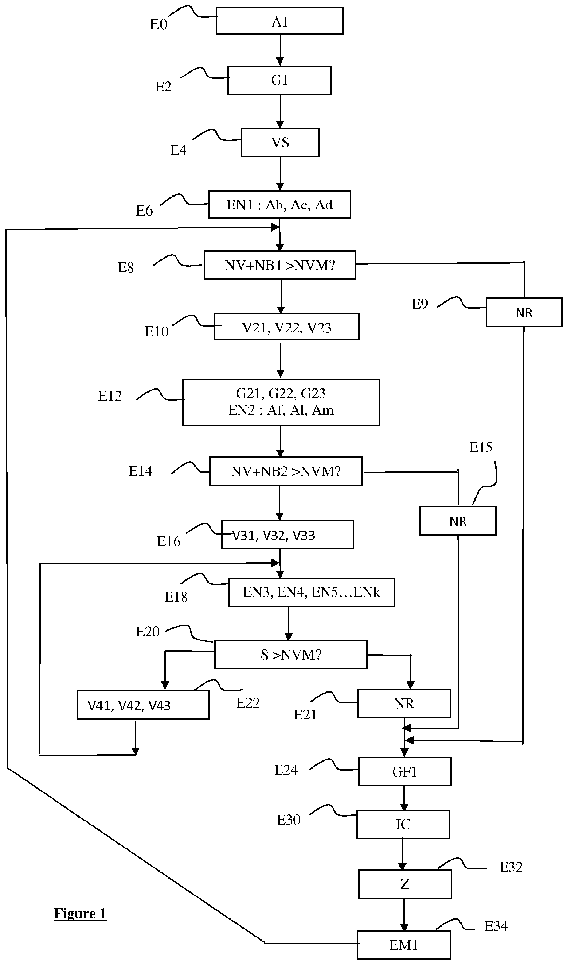

Un premier mode de réalisation du procédé de traitement, mis en œuvre par un dispositif informatique, va maintenant être décrit en référence aux figures 1 à 4.

Un tel dispositif informatique peut être typiquement, à titre d'exemple, un équipement de visualisation doté de fonctionnalités tactiles tel qu'un écran PC, une tablette PC, un téléphone mobile, ou autres. Le dispositif peut ne pas inclure d'écran. Tel peut être le cas par exemple d'un terminal de type Set-Top-Box, connecté en revanche à un écran, par exemple d'un poste de télévision, susceptible d'afficher une interface graphique à disposition d'un utilisateur lequel peut actionner par exemple des boutons d'une télécommande.

La **figure** 1 illustre les différentes étapes du procédé de traitement selon un premier mode de réalisation

Un nombre maximum de vignettes affichées NVM est prédéfini.

En pratique, le nombre NVM est choisi de façon à ce que NVM vignettes soient au moins en partie visibles lorsqu'elles sont affichées sur un même écran.

Lors d'une étape E0, un utilisateur saisit au moyen par exemple d'une interface utilisateur, par exemple une souris d'ordinateur, un nom d'artiste A1, par exemple « BRASSENS ».

« BRASSENS » représente une première entité A1.

Un graphe GF1 contient une première vignette V1 représentant la première entité A1.

Le graphe GF1 est un graphe composé de liens et de nœuds matérialisés par des vignettes.

Un nombre NV de vignettes du graphe GF1 est initialisé avec le nombre de premières vignettes, c'est-à-dire à la valeur 1 dans le mode de réalisation décrit.

Lors d'une étape E2, un groupe G1 d'entités est obtenu par application du premier critère CR1 relativement à la première entité A1. En d'autres termes, les entités du groupe d'entités G1 répondent au premier critère CR1 relativement à la première entité A1.

Le groupe G1 constitue une pluralité d'entités.

Le groupe G1 comprend par exemple une centaine d'artistes.

Dans le mode de réalisation décrit, les entités de l'ensemble EN1 sont sélectionnées parmi une multitude d'entités ne comprenant pas la première entité A1.

L'étape E2 est suivie d'une étape E4 lors de laquelle une valeur de seuil courante VSC est déterminée à partir de la pluralité d'entités G1.

La valeur de seuil courante VSC est une valeur d'une grandeur intervenant dans la définition du deuxième critère CR2, par exemple le nombre de fans.

Par exemple, la valeur de seuil courante VSC est la valeur la plus petite parmi les valeurs de grandeur associées respectivement à chaque entité du groupe d'entités G1.

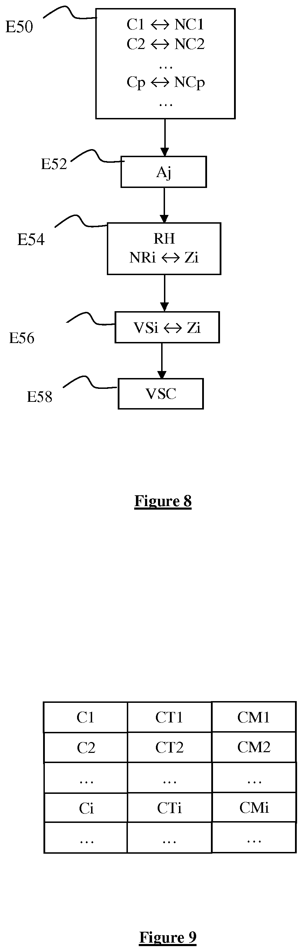

Un exemple de détermination de la valeur de seuil courante VSC est décrit dans la suite de la description en référence à la figure 8.

Lors d'une étape E6, un ensemble d'entités EN1 est déterminé par application du deuxième critère CR2 au groupe d'entités G1.

Les entités de l'ensemble EN1 sont sélectionnées en fonction du deuxième critère CR2 parmi les entités du groupe G1.

L'ensemble d'entités EN1 comprend une ou plusieurs entités du groupe d'entités G1.

Dans le mode de réalisation décrit, l'application du deuxième critère CR2 au groupe d'entités G1 permet de sélectionner les entités du groupe G1 pour lesquelles le nombre de fans associé est supérieur à la valeur de seuil VSC.

L'ensemble d'entités EN1 obtenu suite à la mise en œuvre des étapes E2 et E6 contient des entités sélectionnées en fonction du deuxième critère CR2 parmi une pluralité d'entités répondant au premier critère CR1 relativement à la première entité A1.

L'ensemble d'entités EN1 comprend par exemple trois entités Ab, Ac, Ad.

Lors d'une étape E8, la somme du nombre NV de vignettes du graphe GF1 et du nombre NB1 d'éléments de l'ensemble EN1 est comparée au nombre maximum NVM de vignettes affichées.

Si la somme du nombre NV de vignettes du graphe GF1 et du nombre NB1 d'éléments de l'ensemble EN1 est inférieure ou égale au nombre maximum NVM de vignettes affichées, l'étape E8 est suivie d'une étape E10 lors de laquelle des deuxièmes vignettes V21, V22, V23 sont ajoutées au graphe GF1.

La première vignette V1 représente la première entité A1.

Les deuxièmes vignettes V21, V22 et V23 représentent respectivement les entités Ab, Ac et Ad de l'ensemble EN1.

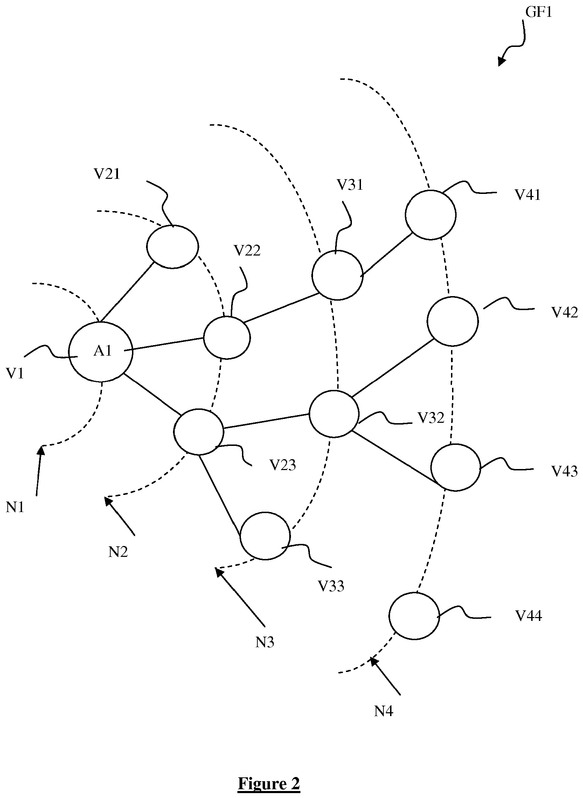

La **figure 2** illustre un exemple de graphe GF1 contenant la première vignette V1 et les deuxièmes vignettes V21, V22 et V23.

La première vignette V1 est reliée directement à chaque deuxième vignette V21, V22 et V23, illustrant ainsi que les entités Ab, Ac, Ad, représentées respectivement par les deuxièmes vignettes V21, V22, V23, ont été sélectionnées à partir de la première entité A1 représentée par la première vignette V1.

La première vignette V1 appartient à un premier niveau de représentation N1 et les deuxièmes vignettes V21, V22 et V23 appartiennent à un deuxième niveau de représentation N2 du graphe GF1.

Dans le mode de réalisation décrit, le graphe GF1 contient une deuxième vignette pour chaque entité de l'ensemble EN1.

A titre d'alternative, le graphe GF1 contient une deuxième vignette pour seulement certaines des entités de l'ensemble EN1.

Si la somme du nombre NV de vignettes du graphe GF1 et du nombre NB1 d'éléments de l'ensemble EN1 est supérieure au nombre maximum NVM de vignettes affichées, un nombre NR de vignettes restant disponibles est calculé et NR entités sont sélectionnées parmi les entités du l'ensemble EN1 déterminé (étape E9).

Les NR entités sont sélectionnées en fonction d'un troisième critère CR3.

Par exemple, les NR entités ayant le plus grand nombre de fans sont sélectionnées et une vignette est ajoutée au graphe GF1 pour chacune de ces NR entités.

L'ensemble des NR entités représente un ensemble d'entités réduit.

Des deuxièmes vignettes représentant respectivement des entités de l'ensemble d'entités réduit sont ajoutées au graphe GF1.

L'étape E9 est suivie d'une étape E24 d'affichage du graphe GF1.

L'étape E10 est suivie d'une étape E12 lors de laquelle les entités d'un ensemble EN2 sont sélectionnées en fonction du deuxième critère CR2 parmi une pluralité d'entités répondant au premier critère CR1 relativement à au moins une entité de l'ensemble EN1.

En d'autres termes, les entités de l'ensemble EN2 sont sélectionnées en fonction du deuxième critère CR2 parmi des entités d'au moins un groupe d'entités, un dit groupe d'entités répondant au premier critère CR1 relativement à une entité de l'ensemble EN1.

Plus précisément, un ou plusieurs groupes d'entités sont obtenus. Chaque groupe contient des entités répondant au premier critère CR1 relativement à une entité de l'ensemble EN1.

Par exemple, trois groupes G21, G22 et G23 sont obtenus respectivement relativement aux entités Ab, Ac et Ad de l'ensemble EN1.

Dans le mode de réalisation décrit, les groupes obtenus ne comprennent ni la première entité A1, ni les entités de l'ensemble EN1 même si celles-ci répondent au premier critère CR1 relativement à une entité de l'ensemble EN1.

Puis, le deuxième ensemble EN2 est obtenu par sélection d'entités parmi les entités des groupes d'entités G21, G22 et G23 en fonction du deuxième critère CR2.

Par exemple, le groupe G21 contient une entité Ae pour laquelle le nombre de fans associé est 200, le groupe G22 contient une entité Af pour laquelle le nombre de fans associé est 2000, une entité Ag pour laquelle le nombre de fans associé est 500 et une entité Ah pour laquelle le nombre de fans associé est 50 et le groupe G23 contient une entité Al pour laquelle le nombre de fans associé est 3000 et une entité Am pour laquelle le nombre de fans associé est 1500.

Dans le cas où la valeur de seuil courante VSC déterminée lors de l'étape E4 est par exemple égale à 999, l'ensemble EN2 comprend 3 entités Af, Al et Am.

Lors d'une étape E14, la somme S du nombre NV de vignettes du graphe GF1 et du nombre NB2 d'éléments de l'ensemble EN2 est comparée au nombre maximum NVM de vignettes affichées. Le nombre NV de vignettes du graphe GF1 est ici la somme du nombre de premières (ici, une seule vignette) et du nombre de deuxièmes vignettes.

Si la somme S est supérieure au nombre NVM, un nombre NR de vignettes restant disponibles est calculé et NR entités sont sélectionnées parmi les entités du l'ensemble EN2 déterminé (étape E15).

Les NR entités sont sélectionnées en fonction d'un troisième critère CR3.

L'ensemble des NR entités représente un ensemble d'entités réduit.

Des troisièmes vignettes représentant respectivement des entités de l'ensemble d'entités réduit sont ajoutées au graphe GF1.

L'étape E15 est suivie d'une étape E24 d'affichage du graphe GF1.

Si la somme S est inférieure ou égale au nombre NVM, des troisièmes vignettes V31, V32, V33 sont ajoutées au graphe GF1 lors d'une étape E16.

Les troisièmes vignettes V31, V32 et V33 représentent respectivement les entités Af, Al et Am de l'ensemble EN1.

Le graphe GF1 illustré sur la figure 2 contient outre la première vignette V1 et les deuxièmes vignettes V21, V22 et V23, les troisièmes vignettes V31, V32 et V33.

Au moins une deuxième vignette V21, V22 ou V23 est reliée directement à un ou plusieurs troisièmes vignettes V31, V32 et V33 illustrant ainsi que les entités Af, Al et Am représentées respectivement par les troisièmes vignettes V31, V32 et V33 ont été sélectionnées relativement à une des entités Ab, Ac ou Ad représentées respectivement par les deuxièmes vignettes V21, V22 et V23.

Les troisièmes vignettes V31, V32 et V33 appartiennent à un troisième niveau de représentation N3.

L'étape E16 est suivie d'une étape E18 de sélection d'un troisième ensemble d'entités EN3.

Les entités de l'ensemble EN3 sont sélectionnées en fonction du deuxième critère CR2 parmi au moins un groupe d'entités, un dit groupe d'entités répondant au premier critère CR1 relativement à une entité de l'ensemble EN2.

L'étape E18 est similaire à l'étape E12.

Si le nombre d'entités d'un ensemble sélectionné est égal à la valeur 0, l'étape E18 est suivie de l'étape E24.

Sinon, l'étape E18 est suivie d'une étape E20 lors de laquelle, la somme S du nombre NV de vignettes du graphe GF1 et du nombre NB3 d'éléments de l'ensemble EN3 est comparée au nombre maximum NVM de vignettes affichées. Le nombre NV de vignettes du graphe GF1 est ici la somme du nombre de premières (ici, une seule vignette), du nombre de deuxièmes vignettes et du nombre de troisièmes vignettes.

Si la somme S est supérieure au nombre NVM, un nombre NR de vignettes restant disponibles est calculé puis NR entités sont sélectionnées parmi les entités du l'ensemble EN3 déterminé (étape E21).

Les NR entités sont sélectionnées en fonction d'un troisième critère CR3.

L'ensemble des NR entités représente un ensemble d'entités réduit.

Des vignettes représentant respectivement des entités de l'ensemble d'entités réduit sont ajoutées au graphe GF1.

L'étape E21 est suivie d'une étape E24.

Si la somme S est inférieure ou égale au nombre NVM, des quatrième vignettes, appelées également vignettes de niveau 4 sont ajoutées au graphe GF1 lors d'une étape E22.

L'étape E22 est suivie d'une nouvelle étape E18.

Dans un mode de réalisation particulier où un nombre de niveaux maximum a été déterminé pour le graphe GF1, l'étape E22 est suivie de l'étape E24 si le nombre de niveaux maximum est atteint pour le graphe GF1.

Sinon, l'étape E22 est suivie d'une nouvelle étape E18.

L'étape E18 peut être réitérée plusieurs fois par récursivité permettant ainsi l'obtention successive d'ensembles d'entités EN4, EN5...

De façon générale, un ensemble ENk est obtenu après l'obtention d'un ensemble ENk-1.

Les entités de l'ensemble ENk sont sélectionnées en fonction du deuxième critère CR2 parmi une pluralité d'entités répondant au premier critère CR1 relativement à au moins une entité de l'ensemble ENk-1.

Les entités de l'ensemble ENk sont sélectionnées en fonction du deuxième critère CR2 parmi des entités d'au moins un groupe d'entités, un dit groupe d'entités répondant au premier critère CR1 relativement à une entité de l'ensemble ENk-1.

Au moins une vignette de niveau (k-1) est reliée directement à une ou plusieurs vignettes de niveau K illustrant ainsi que les entités représentées respectivement par les vignettes de niveau K ont été sélectionnées à partir d'une des entités représentées respectivement par les vignettes de niveau K-1.

Le processus s'arrête quand le nombre maximum NVM de vignettes du graphe GF1 est atteint.

Le processus s'arrête également quand un ensemble d'entités déterminé pour un niveau de représentation considéré ne contient aucun élément. Dans ce cas, le nombre de vignettes du graphe peut être inférieur au nombre maximum de vignettes pouvant être affichées.

Lors d'une étape E24, le graphe GF1 est affiché.

L'étape E24 est une étape de génération d'un signal de commande d'affichage sur un écran d'une interface graphique contenant le graphe GF1.

Dans le mode de réalisation décrit, les vignettes sont affichées après sélection de tous les ensembles.

A titre d'alternative, les vignettes représentant un ensemble d'entités pour un niveau de représentation sont affichées suite à la détermination de cet ensemble et avant la détermination de l'ensemble d'entité pour un niveau de représentation suivant.

Dans le mode de réalisation décrit, les groupes d'entités répondant au premier critère relativement à une entité d'un ensemble d'entités ne comprennent ni la première entité A1, ni les entités du ou des ensembles d'entités sélectionnées précédemment même si celles-ci répondent au premier critère CR1 relativement à une entité de l'ensemble.

De même, dans ce mode de réalisation, une même entité appartenant d'une part à un premier groupe d'entités répondant au premier critère relativement à une entité d'un ensemble et d'autre part, à un deuxième groupe d'entités répondant au premier critère relativement à une autre entité dudit ensemble, n'est sélectionnée qu'une fois en fonction du deuxième critère CR2.

En d'autres termes, une entité sélectionnée en fonction du deuxième critère parmi les entités du premier groupe n'est pas sélectionnée en fonction du deuxième critère CR2 parmi les entités du deuxième groupe même si elle satisfait les conditions du deuxième critère CR2.

Dans ce mode de réalisation, une vignette de niveau k est donc reliée à une seule vignette de niveau (k-1).

Lors d'une étape E30, une icône IC représentant par exemple un curseur est affichée. L'icône comprend au moins deux zones sélectionnables par un utilisateur au moyen d'une interface utilisateur, par exemple une souris d'ordinateur. Chaque zone affichée correspond à une valeur de seuil VS pour le critère CR2.

Un exemple de réalisation d'étapes permettant la détermination du nombre de zones sélectionnables affichées et d'une valeur de seuil VS associée à chaque zone est décrite dans la suite de la description en référence à la figure 8.

Lors d'une étape E32, l'utilisateur sélectionne une zone Z parmi les zones de l'icône IC affichée.

La sélection d'une des zones de l'icône par l'utilisateur déclenche l'attribution pour la valeur de seuil VSC courante, de la valeur de seuil associée à la zone sélectionnée pour la valeur de seuil VS courante.

La valeur de seuil VSC courante est inchangée si la valeur de seuil associée à la zone sélectionnée est la valeur de seuil courante.

La valeur de seuil courante VSC est modifiée sinon. Elle est alors remplacée par la valeur de seuil associée à la zone sélectionnée.

La modification de la valeur de seuil entraine la modification du deuxième critère CR2.

A titre d'alternative, des valeurs correspondant respectivement à des valeurs de seuil prédéterminées en fonction de la pluralité d'entités G1 obtenues lors de l'étape E2 sont affichées et une valeur est sélectionnée parmi ces valeurs par un utilisateur au moyen d'une interface utilisateur.

L'étape E32 est suivie d'une étape E34 lors de laquelle un ensemble d'entités EM1 est sélectionné en fonction du deuxième critère CR2, parmi une pluralité d'entités répondant au premier critère de sélection relativement à la première entité A1.

La valeur de seuil ayant changé, l'ensemble d'entités EM1 peut être différent de l'ensemble d'entités EN1.

La modification de la valeur de seuil permet d'augmenter ou de diminuer le nombre d'entités de l'ensemble sélectionné.

L'étape E34 est suivie des étapes E8 à E30 décrites précédemment.

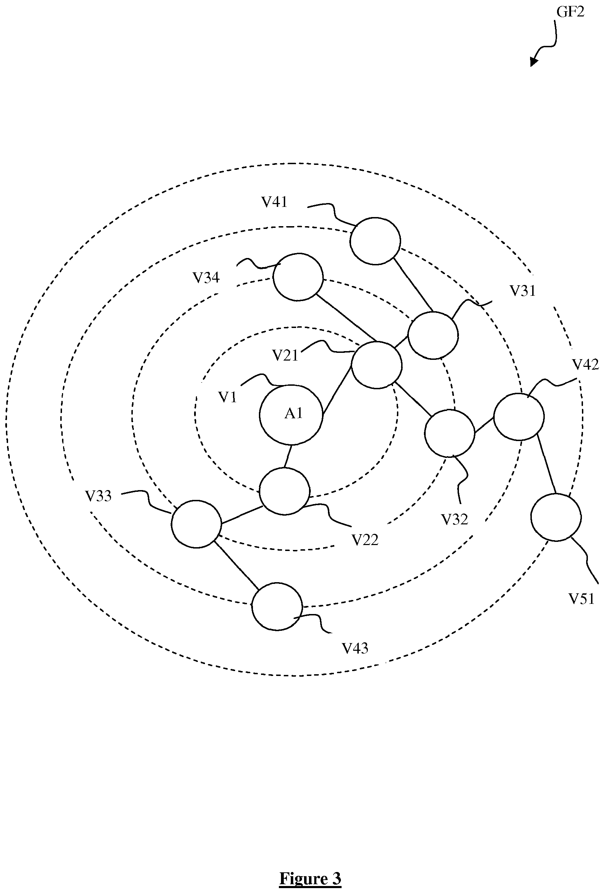

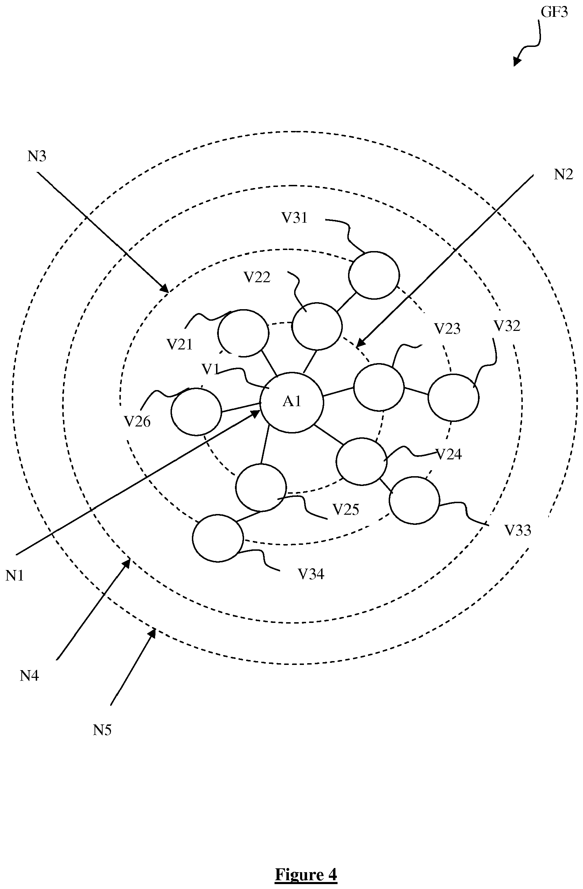

La **figure 3** illustre un graphe GF2 obtenu pour une première valeur de seuil et la **figure 4** illustre un graphe GF3 obtenu pour une deuxième valeur de seuil.

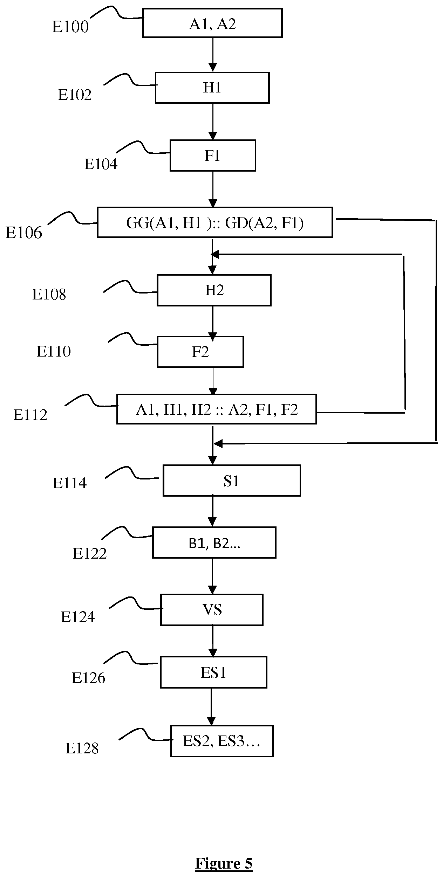

Un deuxième mode de réalisation du procédé de traitement va maintenant être décrit en référence aux figures 5 à 7.

En référence à la **figure 5****,** lors d'une étape E100, un utilisateur saisit au moyen par exemple d'une interface utilisateur, un premier nom d'artiste A1 et un deuxième nom d'artiste A2.

Le premier nom saisit est par exemple « BRASSENS ».

Le deuxième nom saisi est par exemple « PINK FLOYD ».

« BRASSENS » et « PINK FLOYD », représentent respectivement une première entité A1 et une première entité A2.

« BRASSENS » représente une entité de départ. « PINK FLOYD » représente une entité d'arrivée.

Lors d'une étape E102, un ensemble H1 d'entités est sélectionné en fonction du deuxième critère CR2, parmi une pluralité d'entités répondant au premier critère de sélection CR1 relativement à l'entité de départ A1.

Lors d'une étape E104, un ensemble F1 d'entités est sélectionné en fonction du deuxième critère CR2, parmi une pluralité d'entités répondant au premier critère de sélection CR1 relativement à l'entité d'arrivée A2.

Lors d'une étape E106, on détermine si l'entité A1 ou une entité de l'ensemble H1 est une entité de l'ensemble F2 ou l'entité A2, c'est-à-dire qu'on détermine s'il existe une entité commune à un groupe GG contenant l'entité A1 et les entités de l'ensemble H1 et à un groupe GD contenant l'entité A2 et les entités de l'ensemble F1.

Si une entité est commune, l'étape E106 est suivie d'une étape E114.

Sinon, lors d'une étape E108, un ensemble H2 d'entités est obtenu. Les entités de l'ensemble H2 sont sélectionnées en fonction du deuxième critère CR2 parmi les entités d'au moins un groupe d'entités, les entités d'un dit groupe répondant au premier critère CR1 relativement à une entité de l'ensemble H1.

Lors d'une étape E110, un ensemble F2 d'entités est obtenu. Les entités de l'ensemble F2 sont sélectionnées en fonction du deuxième critère CR2 parmi les entités d'au moins un groupe d'entités, les entités d'un dit groupe répondant au premier critère CR1 relativement à une entité de l'ensemble F1.

Lors d'une étape E112, on détermine si l'entité A1, une entité de l'ensemble H1 ou une entité de l'ensemble H2 est une entité de l'ensemble F2, une entité de l'ensemble F1 ou l'entité A2.

S'il n'existe aucune entité commune, les étapes E108 à E112 sont réitérées pour obtenir successivement des ensembles H3, H4... et des ensembles F3, F4 et déterminer s'il existe une entité commune.

Si une entité, par exemple l'entité Ax, est commune, une suite ordonnée S1 d'entités est déterminée lors d'une étape E114.

La première entité de la suite S1 est l'entité de départ Ax. La dernière entité de la suite S1 est l'entité d'arrivée A2.

La suite comprend également l'entité commune Ax.

Elle comprend éventuellement entre l'entité A1 et l'entité Ax, une ou plusieurs entités intermédiaires précédentes.

Dans le cas particulier où l'entité commune Ax est l'entité de départ A1 ou l'entité d'arrivée A2, la suite ordonnée S1 comprend uniquement l'entité A1 et l'entité A2.

Sinon, la suite ordonnée S1 comprend éventuellement entre l'entité Ax et l'entité A2, une ou plusieurs entités intermédiaires suivantes.

L'entité commune Ax appartient par exemple à un ensemble Hp ou est l'entité de départ A1.

L'entité commune Ax appartient par exemple à un ensemble Fq ou est l'entité d'arrivée A2.

Les entités de la suite S1 sont alors successivement l'entité de départ A1, une entité de l'ensemble H1, une entité de l'ensemble H2...une entité de l'ensemble Hₚ₋₁, l'entité commune Ax, une entité de l'ensemble F_{q+1}, ...une entité de l'ensemble F2, une entité de l'ensemble F1 et l'entité d'arrivée A2.

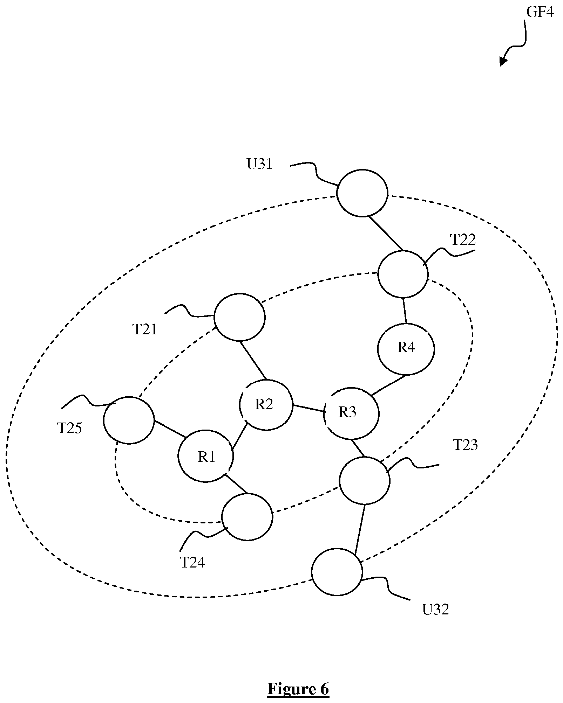

La **figure 6** illustre un graphe GF4 contenant des vignettes R1, R2, R3, R4 représentant respectivement les entités de la suite S1.

La vignette R1 représentant l'entité de départ A1 est reliée à la vignette R4 représentant l'entité d'arrivée A2, par l'intermédiaire des vignettes R2 et R3 représentant des entités intermédiaires.

Les entités de la suite S1 représente des premières entités.

Dans le cas particulier où plusieurs entités communes existent, plusieurs suites ordonnées sont déterminées.

La suite ordonnée S1 est ensuite sélectionnée parmi les suites déterminées soit en fonction d'un critère prédéterminé soit par un utilisateur au moyen d'une interface utilisateur.

Puis, lors d'une étape E122, des groupes d'entités B1, B2...Bi... sont obtenus respectivement pour chaque entité de la suite S1.

Un groupe d'entités Bi est obtenu par application du premier critère CR1 relativement à une entité Ai de la suite S1. Les entités de chaque groupe Bi répondent au premier critère CR1 relativement à une des entités de la suite S1.

Les entités des groupes B1, B2... constituent une pluralité d'entités.

L'étape E122 est suivie d'une étape E124 lors de laquelle une valeur de seuil courante VS est déterminée à partir des entités des groupes B1, B2...Bi...obtenus.

Un exemple de détermination de la valeur de seuil courante VS est décrit dans la suite de la description en référence à la figure 8.

Lors d'une étape E126, un ensemble ES1 est obtenu par sélection d'entités parmi les entités des groupes d'entités B1,B2...Bi... en fonction du deuxième critère CR2.

Un ou plusieurs ensembles ES2, ES3...peuvent ensuite être déterminés successivement à partir de l'ensemble d'entités ES1 (étape E128).

La détermination d'un ensemble ESk de rang k relativement à un ensemble d'entités ESₖ₋₁ de rang (k-1) est par exemple effectuée comme décrit dans le mode de réalisation précédemment décrit.

Le graphe GF4 illustré sur la figure 6 contient les quatre premières vignettes R1, R2, R3 et R4. Il contient également plusieurs deuxièmes vignettes T21 à T25 représentant respectivement des entités de l'ensemble d'entités ES1 et des troisièmes vignettes U31 et U32 représentant respectivement des entités de l'ensemble d'entités ES2.

Au moins une première vignette R1, R2, R3, R4 est reliée directement à un ou plusieurs deuxièmes vignettes T21, T22...

Les premières vignettes sont affichées sur un premier niveau de représentation N1.

Les deuxièmes vignettes T21, T22... sont affichées sur un deuxième niveau de représentation N2.

Les troisièmes vignettes U31 et U32 sont affichées sur un troisième niveau de représentation N3.

Dans un mode de réalisation particulier, une liste de morceaux de musique ou de chansons est constituée à partir du graphe obtenu.

La liste comprend par exemple une chanson associée à chaque première entité représentée par une première vignette.

En variante, une icône représentant un curseur contenant plusieurs zones sélectionnables est affichée et l'utilisateur peut obtenir, suite à la sélection d'une zone, un deuxième graphe contenant les vignettes R1, R2, R3 et R4 et un nombre de deuxièmes vignettes différent de celui du graphe GF4 précédemment affiché

Dans le mode de réalisation décrit, les premières entités sont les entités d'une suite ordonnée.

Dans une variante du mode de réalisation, les premières entités sont des entités choisies par un utilisateur, au moyen par exemple d'une interface utilisateur.

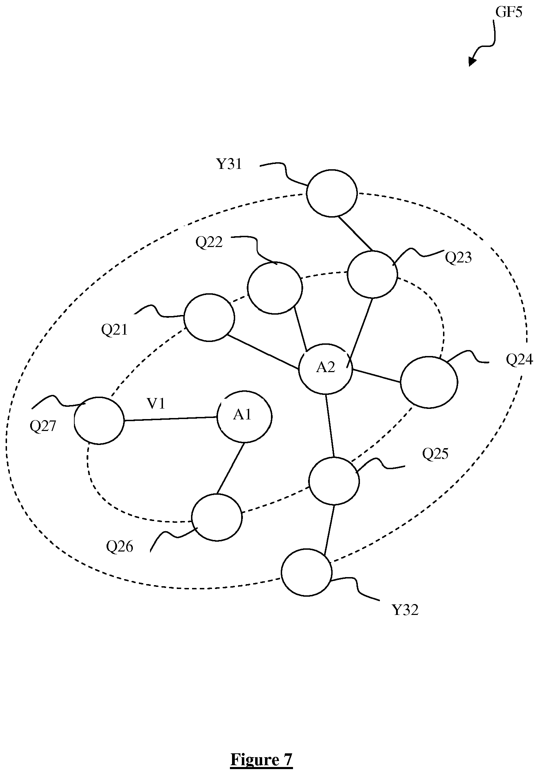

La **figure 7** illustre un graphe GF5 contenant deux premières vignettes V1 et V2 représentant respectivement deux entités A1 et A2 choisies par un utilisateur. Le graphe GF5 contient également des deuxièmes vignettes T21 à T27 et des troisièmes vignettes U31 et U32. Chaque deuxième vignette représente représentant une entité déterminée relativement à une des premières vignettes. Chaque troisième vignette représente une entité déterminée relativement à une deuxième vignette

Chaque première vignette est reliée directement à une ou plusieurs deuxièmes vignettes.

Au moins une deuxième vignette est reliée directement à une ou plusieurs troisièmes vignettes.

Un exemple de détermination de valeurs de seuil à partir d'un ensemble EN d'entités est maintenant décrit en référence aux figures 8 et 9.

Un ensemble de classes est prédéfini pour une grandeur considérée, par exemple la grandeur « nombre de fans ». Ces classes permettent de regrouper des entités en fonction des valeurs de la grandeur « nombre de fans » associées à ces entités.

L'ensemble des classes est un ensemble ordonné.

Une classe Ci dudit ensemble est par exemple définie par une valeur minimum CTi de la grandeur « nombre de fans » et par une valeur maximum CMi de la grandeur « nombre de fans ».

Les classes sont par exemple définies en fonction d'un pas prédéterminé et d'un facteur d'échelle prédéterminé.

La **figure 9** illustre un exemple de valeurs minimum et des valeurs maximum obtenues pour des classes C1, C2...définies en fonction d'un pas de 10 et d'un facteur d'échelle égal à 2.

A titre d'alternative, chaque classe est définie par une valeur minimum et par une valeur maximum de la grandeur « nombre de fans » telles que la différence entre ces deux valeurs soit égale à un nombre prédéterminé, par exemple 999.

Lors d'une étape E50, chaque entité de l'ensemble EN est associée à une des classes.

Chaque classe C1, C2...Cp...regroupe ainsi NC1, NC2...NCp...éléments de l'ensemble EN considéré.

Lors d'une étape E52, l'entité Aj de l'ensemble EN pour laquelle la valeur VAj de la grandeur « nombre de fans » est la plus élevée parmi les entités de l'ensemble EN est sélectionnée.

Lors d'une étape E54, un rang maximum RH est déterminé. Le rang maximum RH est le rang de la classe à laquelle appartient l'entité Aj sélectionnée lors de l'étape E52.

Si le rang maximum RH est supérieur ou égal à 2, un nombre de zones NBZ déterminées correspond au rang maximum RH, sinon le nombre de zones NBZ est fixé à la valeur 2. Ainsi le nombre de zones NBZ est toujours au moins égal à la valeur 2.

Un numéro d'ordre NRi est associé à chaque zone Zi.

Lors d'une étape E56, une valeur de seuil VSi est associée à chaque zone Zi.

La valeur de seuil VSi associée à une zone d'ordre i est par exemple la valeur minimum CTi de la grandeur « nombre de fans » définie pour la classe Ci.

La valeur de seuil VS1 associée à la première zone Z1 est par exemple la valeur CT1, par exemple la valeur 0.

La valeur de seuil VS2 associée à la deuxième zone Z2 est par exemple la valeur CT2.

Lors d'une étape E58, une valeur de seuil courante VSC est déterminée.

La valeur de seuil courante VSC est une valeur de seuil utilisée avant sélection d'une zone Zi par l'utilisateur.

La valeur de seuil courante VSC est par exemple la valeur minimum CTj de la grandeur « nombre de fans » d'une classe Cj telle que la classe Cj est par exemple la classe d'ordre immédiatement inférieur à la classe Ca associée à la première entité A1.

Par exemple, si la première entité A1 appartient à la classe C4, la valeur de seuil courante VSC déterminée est CT3.

Ainsi dans le cas décrit où le critère CR2 permet la sélection des artistes pour lesquels le nombre de fans est supérieur à une valeur de seuil courante VSC, le choix de la valeur CT3 lorsque la première entité A1 appartient à la classe C4 permet l'affichage de vignettes représentant des artistes des classes de rang supérieur à 3.

Dans le cas où la classe Cj d'ordre immédiatement inférieur à la classe Ca n'est pas une classe retenue, la valeur de seuil courante VSC est par exemple la valeur minimum CTj de la grandeur « nombre de fans » de la classe de rang maximum RH.

Dans le cas où l'ensemble d'entités répondant au premier critère CR1 relativement à la première entité A1 ne comprend pas d'entités, la valeur de seuil courante VSC est par exemple fixée à la valeur 0.

Dans le cas où il existe plusieurs premières entités, c'est-à-dire plusieurs premiers artistes, la valeur de seuil courante VSC est par exemple la valeur minimum CTj de la grandeur « nombre de fans » d'une classe Cj telle que la classe Cj est par exemple la classe d'ordre immédiatement inférieur à la classe Cb de rang le plus petit parmi les rangs des classes associées respectivement aux premières entités.

Dans les modes de réalisation décrits, les entités sont des artistes.

A titre d'alternative, les entités peuvent être des noms de fichiers, des contenus...

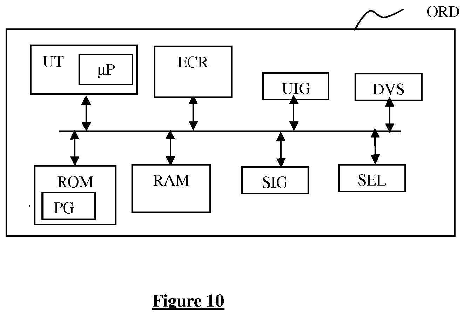

Selon un mode de réalisation choisi et représenté à la **figure 10**, un dispositif mettant en œuvre un procédé de traitement selon l'invention est par exemple un ordinateur ORD qui comporte de façon connue, notamment une unité de traitement UT équipée d'un microprocesseur, une mémoire morte de type ROM ou EEPROM, une mémoire vive de type RAM.

Ce dispositif comprend également un écran ECR, des moyens d'interface graphique UIG, par exemple une souris d'ordinateur,

Ce dispositif ORD comprend un module SIG de génération d'un signal de commande d'affichage un module DVS de détermination d'une valeur de seuil et un module de sélection SEL.

Le module de sélection SEL est apte à sélectionner un ensemble d'entités en fonction d'au moins un deuxième critère, parmi une pluralité d'entités répondant à un premier critère de sélection relativement à une première entité.

Le module de détermination d'une valeur de seuil DVS est apte à déterminer une valeur de seuil courante à partir de la pluralité d'entités.

Le module SIG de génération d'un signal de commande d'affichage est apte à générer un signal de commande d'affichage sur l'écran ECR d'une interface graphique comprenant un graphe composé de liens et de nœuds matérialisés par des vignettes, chaque vignette représentant une entité. Ledit graphe contient une première vignette représentant une première entité reliée directement à une ou plusieurs deuxièmes vignettes représentant chacune une deuxième entité dudit ensemble d'entités, le nombre de dites deuxièmes vignettes étant fonction de la valeur de seuil courante déterminée à partir de la pluralité d'entité.

La mémoire morte EEPROM contient un programme d'ordinateur PG comportant des instructions de programme adaptées à réaliser les étapes d'un procédé de traitement selon l'invention.

Lors de la mise sous tension, le programme PG stocké dans la mémoire de type EEPROM est transféré dans la mémoire vive qui contiendra alors un code exécutable ainsi que des registres pour mémoriser les variables nécessaires à la mise en œuvre d'une étape de sélection d'un ensemble d'entités en fonction d'au moins un deuxième critère, parmi une pluralité d'entités répondant à un premier critère de sélection relativement à la première entité et une étape de génération d'un signal de commande d'affichage sur un écran d'une interface graphique comprenant un graphe composé de liens et de nœuds matérialisés par des vignettes, chaque vignette représentant une entité, ledit graphe contenant une première vignette représentant une première entité, reliée dans ledit graphe directement à une ou plusieurs deuxièmes vignettes représentant chacune une deuxième entité dudit ensemble d'entités, le nombre de dites deuxièmes vignettes étant fonction d'une valeur de seuil courante déterminée à partir de la pluralité d'entités.

De manière plus générale un moyen de stockage, lisible par un ordinateur ou par un microprocesseur, intégré ou non au dispositif, éventuellement amovible, mémorise un programme mettant en œuvre les étapes d'un procédé de contrôle, selon l'invention.

## Revendications

1. Procédé de traitement de données, mis en œuvre par un dispositif informatique (ORD) comportant :
une étape de génération (E24) d'un signal de commande d'affichage sur un écran d'une interface graphique comprenant un graphe (GF1) composé de liens et de nœuds matérialisés par des vignettes, chaque vignette représentant une entité, ledit graphe contient une première vignette (V1) représentant une première entité (A1) ;
une étape de sélection (E6) d'un ensemble d'entités (EN1) en fonction d'au moins un deuxième critère de sélection (CR2), parmi une pluralité d'entités répondant à un premier critère de sélection (CR1) relativement à la première entité (A1) ;
la première vignette (V1) dudit graphe (GF1) étant reliée dans ledit graphe directement à une ou plusieurs deuxièmes vignettes (V21, V22) représentant chacune une entité dudit ensemble d'entités (EN1),
le deuxième critère dépendant d'une valeur de seuil courante déterminée en fonction de la pluralité d'entités répondant au premier critère, ladite valeur de seuil courante est une valeur d'une grandeur prédéfinie, au moins une valeur de ladite grandeur étant associée à au moins une entité et ledit au moins un deuxième critère est un critère de comparaison entre une valeur de ladite grandeur associée à une entité et ladite valeur de seuil courante,
**Caractérisé en ce que** l'interface graphique contient une icône comprenant au moins deux zones sélectionnables par un utilisateur, chaque zone étant associée à une valeur de seuil, et **en ce que**, lorsque l'utilisateur sélectionne l'une desdites au moins deux zones de l'icône, la valeur de seuil courante (VSC) est remplacée par la valeur de seuil associée à la zone sélectionnée et la sélection de ladite zone est suivi de l'affichage d'un graphe modifié contenant un nombre modifié de dites deuxièmes vignettes.

2. Procédé de traitement de données selon la revendication 1 dans lequel ledit graphe contient une pluralité de vignettes réparties sur deux niveaux, la première vignette (V1) appartenant à un premier niveau (N1) et les deuxièmes vignettes étant réparties sur un deuxième niveau (N2),
**Caractérisé en ce qu'**il comporte en outre
la sélection de N ensembles d'entités (EN2, EN3, ENk), N étant supérieur ou égal à un,
la sélection d'un deuxième ensemble d'entités (EN2) étant effectuée en fonction dudit au moins un deuxième critère, parmi des entités d'au moins un groupe d'entités (G21, G22), les entités d'un dit groupe d'entités répondant audit au moins un premier critère de sélection relativement à une entité dudit ensemble,
la sélection d'un Kième ensemble d'entités (ENk) (k>2) est effectuée en fonction dudit au moins un deuxième critère, parmi des entités d'au moins un groupe d'entités, les entités d'un dit groupe d'entités répondant audit au moins un premier critère de sélection relativement à une entité du (K-1)ème ensemble,
une vignette du niveau (k-1) dudit graphe est reliée dans ledit graphe directement à une ou plusieurs vignettes de niveau K représentant chacune une entité dudit Kième ensemble d'entités, le nombre de dites vignettes de niveau K étant dépendant dudit au moins un deuxième critère.

3. Procédé de traitement selon la revendication 2 dans lequel la sélection d'un Kème ensemble comprend en outre une étape de test pour déterminer si la somme du nombre NV de vignettes d'ordre strictement inférieur à K dudit graphe et du nombre NK d'entités du Kème ensemble est supérieure à une valeur maximum prédéfinie NVM, et dans le cas où la dite somme est supérieure à ladite valeur maximum NVM, une étape de détermination d'un ensemble réduit d'entités comprenant (NVM-NV) entités sélectionnées parmi les NK entités du Kème ensemble, chaque vignette de niveau K représentant une entité dudit ensemble réduit.

4. Procédé de traitement de données selon la revendication 4 dans lequel la valeur de seuil courante est sélectionnée parmi plusieurs valeurs de seuil déterminées en fonction de ladite pluralité d'entités.

5. Procédé de traitement de données selon la revendication 1 dans lequel le nombre de zones et la valeur de seuil associée à chaque zone sont déterminés à partir de ladite pluralité.

6. Procédé de traitement de données selon l'une des revendications 1 ou 7 dans lequel une pluralité de classes étant prédéfinie pour une grandeur prédéfinie, un rang étant associé à chaque classe, chaque entité de la pluralité d'entités est associée à une des classes en fonction de la valeur de la grandeur associée à ladite entité et le nombre de zones dépend du rang le plus élevé parmi les rangs des classes pour lesquelles au moins une entité de la pluralité a été associée.

7. Procédé de traitement de données selon la revendication 6 dans lequel le nombre de zones est le nombre de classes pour lesquelles au moins une entité de la pluralité a été associée.

8. Procédé de traitement de données selon l'une des revendications 4 à 7 dans lequel le graphe comprend au moins deux premières vignettes représentant chacune une première entité et dans lequel le procédé comprend une étape d'obtention d'un ensemble d'entités de rang 1 sélectionnées en fonction dudit au moins un deuxième critère de sélection parmi des entités d'au moins deux groupes d'entités, les entités d'un dit groupe répondant audit au moins un premier critère de sélection relativement à une des premières entités,
chaque première vignette dudit graphe est reliée dans ledit graphe directement à une ou plusieurs deuxièmes vignettes représentant chacune une entité dudit ensemble d'entités de rang 1, le nombre de dites deuxièmes vignettes étant fonction d'une valeur de seuil déterminée à partir d'entités desdits au moins deux groupes d'entités.

9. Procédé de traitement de données selon la revendication 8 dans lequel le graphe contient deux premières entités et dans lequel une première des deux premières entités est une entité d'un ensemble d'entités sélectionnées en fonction dudit au moins un deuxième critère de sélection parmi une pluralité d'entités répondant audit premier critère de sélection relativement à une deuxième des premières entités.

10. Procédé de traitement de données selon la revendication 8 dans lequel les premières vignettes forment une suite ordonnée d'au moins trois vignettes parmi lesquelles la première vignette de la suite représentant une entité de départ, la dernière vignette de la suite représentant une entité d'arrivée, et au moins une vignette intermédiaire représentant une entité intermédiaire, une vignette intermédiaire de la suite étant reliée à une vignette précédente et à une vignette suivante, la vignette précédente représentant l'entité de départ ou une entité intermédiaire précédente et la vignette suivante représentant l'entité d'arrivée ou une entité intermédiaire suivante, et
dans lequel une entité intermédiaire est une entité d'un ensemble ENp d'entités obtenu par sélections successives en fonction dudit au moins un deuxième critère de sélection parmi une pluralité d'entités répondant audit premier critère de sélection relativement à l'entité de départ et/ou une entité d'un ensemble ENq d'entités obtenu par sélections successives en fonction dudit au moins un deuxième critère de sélection parmi une pluralité d'entités répondant audit premier critère de sélection relativement à l'entité d'arrivée.

11. Procédé de traitement de données selon la revendication 10 dans lequel les entités sont des artistes et le procédé comporte en outre une étape de construction d'une liste de morceaux de musique, ladite liste comportant des morceaux associés respectivement à chaque entité de la suite.

12. Dispositif (ORD) comportant :
des moyens de génération (GEN) d'un signal de commande d'affichage sur un écran (ECR) d'une interface graphique comprenant un graphe (GF1) composé de liens et de nœuds matérialisés par des vignettes, chaque vignette représentant une entité, ledit graphe contient une première vignette (V1) représentant une première entité (A1),
un module de sélection (SEL) d'un ensemble d'entités en fonction d'au moins un deuxième critère de sélection, parmi une pluralité d'entités répondant à un premier critère de sélection relativement à la première entité,
la première vignette dudit graphe étant reliée dans ledit graphe directement à une ou plusieurs deuxièmes vignettes représentant chacune une deuxième entité dudit ensemble d'entités,
le deuxième critère étant dépendant d'une valeur de seuil courante déterminée en fonction de la pluralité d'entités répondant au premier critère, ladite valeur de seuil courante est une valeur d'une grandeur prédéfinie, au moins une valeur de ladite grandeur étant associée à au moins une entité et ledit au moins un deuxième critère est un critère de comparaison entre une valeur de ladite grandeur associée à une entité et ladite valeur de seuil courante,
**Caractérisé en ce que** l'interface graphique contient une icône comprenant au moins deux zones sélectionnables par un utilisateur, chaque zone étant associée à une valeur de seuil, et **en ce que**, lorsque l'utilisateur sélectionne l'une desdites au moins deux zones de l'icône, la valeur de seuil courante est remplacée par la valeur de seuil associée à la zone sélectionnée et la sélection de ladite zone est suivi de l'affichage d'un graphe modifié contenant un nombre modifié de dites deuxièmes vignettes.

## Patentansprüche

1. Datenverarbeitungsverfahren, das von einer Computervorrichtung (ORD) durchgeführt wird, aufweisend:
einen Schritt des Erzeugens (E24) eines Steuersignals zur Anzeige, auf einem Bildschirm, einer graphischen Schnittstelle umfassend einen Graphen (GF1), der aus Verbindungen und Knoten, die durch Miniaturbilder materialisiert sind, zusammengesetzt ist, wobei jedes Miniaturbild eine Einheit darstellt, wobei der Graph ein erstes Miniaturbild (V1) enthält, das eine erste Einheit (A1) darstellt;
einen Schritt des Auswählens (E6) einer Menge von Einheiten (EN1), in Abhängigkeit von mindestens einem zweiten Auswahlkriterium (CR2), aus einer Mehrzahl von Einheiten, die ein erstes Auswahlkriterium (CR1) bezogen auf die erste Einheit (A1) erfüllen;
wobei das erste Miniaturbild (V1) des Graphen (GF1) in dem Graphen direkt mit einem oder mehreren zweiten Miniaturbildern (V21, V22) verbunden ist, die jeweils eine Einheit der Menge von Einheiten (EN1) darstellen,
wobei das zweite Kriterium von einem aktuellen Schwellenwert abhängig ist, der in Abhängigkeit von der Mehrzahl von Einheiten bestimmt wird, die das erste Kriterium erfüllen, wobei der aktuelle Schwellenwert ein Wert einer vorgegebenen Größe ist, wobei mindestens ein Wert der Größe mindestens einer Einheit zugeordnet ist und das mindestens eine zweite Kriterium ein Kriterium zum Vergleich zwischen einem Wert der Größe, der einer Einheit zugeordnet ist, und dem aktuellen Schwellenwert ist,
**Dadurch gekennzeichnet, dass** die graphische Schnittstelle ein Symbol enthält, das mindestens zwei Bereiche umfasst, die von einem Benutzer ausgewählt werden können, wobei jeder Bereich einem Schwellenwert zugeordnet ist, und dadurch, dass, wenn der Benutzer einen der mindestens zwei Bereiche des Symbols auswählt, der aktuelle Schwellenwert (VSC) durch den Schwellenwert ersetzt wird, der dem ausgewählten Bereich zugeordnet ist, und auf die Auswahl des Bereichs die Anzeige eines geänderten Graphen folgt, der eine geänderte Anzahl der zweiten Miniaturbilder enthält.

2. Datenverarbeitungsverfahren nach Anspruch 1, wobei der Graph eine Mehrzahl von Miniaturbildern enthält, die auf zwei Ebenen verteilt sind, wobei das erste Miniaturbild (V1) zu einer ersten Ebene (N1) gehört und die zweiten Miniaturbilder auf einer zweiten Ebene (N2) verteilt sind,
**Dadurch gekennzeichnet, dass** es ferner Folgendes aufweist das Auswählen von N Mengen von Einheiten (EN2, EN3, ENk), wobei N größer als oder gleich eins ist,
das Auswählen einer zweiten Menge von Einheiten (EN2), das in Abhängigkeit von dem mindestens einen zweiten Kriterium durchgeführt wird, aus Einheiten mindestens einer Gruppe von Einheiten (G21, G22), wobei die Einheiten einer der Gruppen von Einheiten mindestens das eine erste Auswahlkriterium bezogen auf eine Einheit der Menge erfüllen,
das Auswählen einer K-ten Menge von Einheiten (ENk) (k>2) in Abhängigkeit von dem mindestens einen zweiten Kriterium aus Einheiten mindestens einer Gruppe von Einheiten durchgeführt wird, wobei die Einheiten einer der Gruppen von Einheiten mindestens das eine erste Auswahlkriterium bezogen auf eine Einheit der (K-1)ten Menge erfüllen,
ein Miniaturbild der Ebene (k-1) des Graphen in dem Graphen direkt mit einem oder mehreren Miniaturbildern der Ebene K verbunden ist, die jeweils eine Einheit der K-ten Menge von Einheiten darstellen, wobei die Anzahl der Miniaturbilder der Ebene K von dem mindestens einen zweiten Kriterium abhängig ist.

3. Verarbeitungsverfahren nach Anspruch 2, wobei das Auswählen einer K-ten Menge ferner einen Schritt des Testens umfasst, um zu bestimmen, ob die Summe der Anzahl NV von Miniaturbildern einer Ordnung streng kleiner als K des Graphen und der Anzahl NK von Einheiten der K-ten Menge größer als ein vorgegebener Maximalwert NVM ist, und in dem Fall, dass die Summe größer als der Maximalwert NVM ist, einen Schritt des Bestimmens einer verringerten Menge von Einheiten umfassend (NVM-NV) Einheiten, die aus den NK Einheiten der K-ten Menge ausgewählt werden, wobei jedes Miniaturbild der Ebene K eine Einheit der verringerten Menge darstellt.

4. Datenverarbeitungsverfahren nach Anspruch 4, wobei der aktuelle Schwellenwert aus mehreren Schwellenwerten ausgewählt wird, die in Abhängigkeit von der Mehrzahl von Einheiten bestimmt werden.

5. Datenverarbeitungsverfahren nach Anspruch 1, wobei die Anzahl von Bereichen und der Schwellenwert, der jedem Bereich zugeordnet ist, anhand der Mehrzahl bestimmt werden.

6. Datenverarbeitungsverfahren nach einem der Ansprüche 1 oder 7, wobei eine Mehrzahl von Klassen für einen vorgegebenen Wert vorgegeben wird, wobei jeder Klasse ein Rang zugeordnet wird, jede Einheit der Mehrzahl von Einheiten in Abhängigkeit von dem Wert der Größe, der der Einheit zugeordnet ist, einer der Klassen zugeordnet wird, und die Anzahl von Bereichen vom höchsten Rang der Ränge der Klassen abhängig ist, für welche mindestens eine Einheit der Mehrzahl zugeordnet wurde.

7. Datenverarbeitungsverfahren nach Anspruch 6, wobei die Anzahl von Bereichen die Anzahl von Klassen ist, für welche mindestens eine Einheit der Mehrzahl zugeordnet wurde.

8. Datenverarbeitungsverfahren nach einem der Ansprüche 4 bis 7, wobei der Graph mindestens zwei erste Miniaturbilder umfasst, die jeweils eine erste Einheit umfassen, und wobei das Verfahren einen Schritt des Beziehens einer Menge von Einheiten von Rang 1 umfasst, die in Abhängigkeit von dem mindestens einen zweiten Auswahlkriterium aus Einheiten mindestens zweier Gruppen von Einheiten ausgewählt werden, wobei die Einheiten einer der Gruppen mindestens das eine erste Auswahlkriterium bezogen auf eine der ersten Einheiten erfüllt,
wobei jedes erste Miniaturbild des Graphen in dem Graphen direkt mit einem oder mehreren zweiten Miniaturbildern verbunden ist, die jeweils eine Einheit der Menge von Einheiten von Rang 1 darstellen, wobei die Anzahl der zweiten Miniaturbilder von einem Schwellenwert abhängig ist, der anhand von Einheiten der mindestens zwei Gruppen von Einheiten bestimmt wird.

9. Datenverarbeitungsverfahren nach Anspruch 8, wobei der Graph zwei erste Einheiten enthält und wobei eine erste der zwei ersten Einheiten eine Einheit einer Menge von Einheiten ist, die in Abhängigkeit von dem mindestens einen zweiten Auswahlkriterium aus einer Mehrzahl von Einheiten auswählt wird, die das erste Auswahlkriterium bezogen auf eine zweite der ersten Einheiten erfüllen.

10. Datenverarbeitungsverfahren nach Anspruch 8, wobei die ersten Miniaturbilder eine geordnete Reihe mindestens dreier Bilder bilden, wovon das erste Miniaturbild der Reihe eine Starteinheit darstellt, die letzte Einheit der Reihe eine Zieleinheit darstellt, und mindestens ein Zwischenminiaturbild eine Zwischeneinheit darstellt, wobei eine Zwischeneinheit der Reihe mit einem vorigen und einem nachfolgenden Miniaturbild verbunden ist, wobei das vorige Miniaturbild die Starteinheit oder eine vorige Zwischeneinheit darstellt und das nachfolgende Miniaturbild die Zieleinheit oder eine nachfolgende Zwischeneinheit darstellt, und
wobei eine Zwischeneinheit eine Einheit einer Menge ENp von Einheiten, die durch aufeinanderfolgende Auswahlen in Abhängigkeit von dem mindestens einen zweiten Auswahlkriterium aus einer Mehrzahl von Einheiten bezogen wird, die das erste Auswahlkriterium bezogen auf die Starteinheit erfüllen, und/oder eine Einheit einer Menge ENq von Einheiten ist, die durch aufeinanderfolgende Auswahlen in Abhängigkeit von dem mindestens einen zweiten Auswahlkriterium aus einer Mehrzahl von Einheiten bezogen wird, die das erste Auswahlkriterium bezogen auf die Zieleinheit erfüllen.

11. Datenverarbeitungsverfahren nach Anspruch 10, wobei die Einheiten Künstler sind und das Verfahren ferner einen Schritt des Aufbauens einer Liste mit Musikstücken aufweist, wobei die Liste Stücke aufweist, die jeweils jeder Einheit der Reihe zugeordnet sind.

12. Vorrichtung (ORD) aufweisend:
Mittel zum Erzeugen (GEN) eines Steuersignals zur Anzeige, auf einem Bildschirm (ECR), einer graphischen Schnittstelle umfassend einen Graphen (GF1), der aus Verbindungen und Knoten zusammengesetzt ist, die durch Miniaturbilder materialisiert sind, wobei jedes Miniaturbild eine Einheit darstellt, wobei der Graph ein erstes Miniaturbild (V1) enthält, das eine erste Einheit (A1) darstellt,
ein Modul zum Auswählen (SEL) einer Menge von Einheiten, in Abhängigkeit von mindestens einem zweiten Auswahlkriterium, aus einer Mehrzahl von Einheiten, die ein erstes Auswahlkriterium bezogen auf die erste Einheit erfüllen,
wobei das erste Miniaturbild des Graphen in dem Graphen direkt mit einem oder mehreren zweiten Miniaturbildern verbunden ist, die jeweils eine zweite Einheit der Menge von Einheiten darstellen,
wobei das zweite Kriterium von einem aktuellen Schwellenwert abhängig ist, der in Abhängigkeit von der Mehrzahl von Einheiten bestimmt wird, die das erste Kriterium erfüllen, wobei der aktuelle Schwellenwert ein Wert einer vorgegebenen Größe ist, wobei mindestens ein Wert der Größe mindestens einer Einheit zugeordnet ist und das mindestens eine zweite Kriterium ein Kriterium zum Vergleich zwischen einem Wert der Größe, der einer Einheit zugeordnet ist, und dem aktuellen Schwellenwert ist,
**Dadurch gekennzeichnet, dass** die graphische Schnittstelle ein Symbol enthält, das mindestens zwei Bereiche umfasst, die von einem Benutzer ausgewählt werden können, wobei jeder Bereich einem Schwellenwert zugeordnet ist, und dadurch, dass, wenn der Benutzer einen der mindestens zwei Bereiche des Symbols auswählt, der aktuelle Schwellenwert durch den Schwellenwert ersetzt wird, der dem ausgewählten Bereich zugeordnet ist, und auf die Auswahl des Bereichs die Anzeige eines geänderten Graphen folgt, der eine geänderte Anzahl der zweiten Miniaturbilder enthält.

## Claims

1. Data processing method implemented by a computing device (ORD), including:
a step (E24) of generating a control signal for the display, on a screen, of a graphical interface comprising a graph (GF1) composed of links and of nodes depicted by vignettes, each vignette representing an entity, said graph containing a first vignette (V1) representing a first entity (A1);
a step (E6) of selecting a set of entities (EN1) on the basis of at least one second selection criterion (CR2) from among a plurality of entities that meet a first selection criterion (CR1) relative to the first entity (A1);
the first vignette (V1) of said graph (GF1) being linked, in said graph, directly to one or more second vignettes (V21, V22) that each represent an entity of said set of entities (EN1),
the second criterion being dependent on a current threshold value determined on the basis of the plurality of entities that meet the first criterion, said current threshold value being a value of a predefined quantity, at least one value of said quantity being associated with at least one entity, and said at least one second criterion being a criterion of comparison between a value of said quantity associated with an entity and said current threshold value,
**characterized in that** the graphical interface contains an icon that comprises at least two areas that are selectable by a user, each area being associated with a threshold value, and **in that**, when the user selects one of said at least two areas of the icon, the current threshold value (VSC) is replaced by the threshold value associated with the selected area, and the selection of said area is followed by the display of a modified graph containing a modified number of said second vignettes.

2. Data processing method according to Claim 1, wherein said graph contains a plurality of vignettes distributed over two levels, the first vignette (V1) belonging to a first level (N1), and the second vignettes being distributed over a second level (N2),
**characterized in that** it further includes the selection of N sets of entities (EN2, EN3, ENk), N being greater than or equal to one,
the selection of a second set of entities (EN2) being performed on the basis of said at least one second criterion from among entities of at least one group of entities (G21, G22), the entities of one said group of entities meeting said at least one first selection criterion relative to an entity of said set,
the selection of a Kth set of entities (ENk) (k>2) is performed on the basis of said at least one second criterion from among the entities of at least one group of entities, the entities of one said group of entities meeting said at least one first selection criterion relative to an entity of the (K-1)th set,
a vignette of the level (k-1) of said graph is linked, in said graph, directly to one or more vignettes of level K, which each represent an entity of said Kth set of entities, the number of said vignettes of level K being dependent on said at least one second criterion.

3. Processing method according to Claim 2, wherein the selection of a Kth set further comprises a testing step to determine whether the sum of the number NV of vignettes of order strictly lower than K of said graph and of the number NK of entities of the Kth set is greater than a predefined maximum value NVM and, if said sum is greater than said maximum value NVM, a step of determining a reduced set of entities comprising (NVM-NV) entities selected from among the NK entities of the Kth set, each vignette of level K representing an entity of said reduced set.

4. Data processing method according to Claim 4, wherein the current threshold value is selected from among several threshold values determined on the basis of said plurality of entities.

5. Data processing method according to Claim 1, wherein the number of areas and the threshold value associated with each area are determined on the basis of said plurality.

6. Data processing method according to either of Claims 1 and 7, wherein, a plurality of classes being predefined for a predefined quantity, a rank being associated with each class, each entity of the plurality of entities is associated with one of the classes on the basis of the value of the quantity associated with said entity, and the number of areas is dependent on the highest rank from among the ranks of the classes for which at least one entity of the plurality has been associated.

7. Data processing method according to Claim 6, wherein the number of areas is the number of classes for which at least one entity of the plurality has been associated.

8. Data processing method according to one of Claims 4 to 7, wherein the graph comprises at least two first vignettes, which each represent a first entity, and wherein the method comprises a step of obtaining a set of entities of rank 1, which are selected on the basis of said at least one second selection criterion from among the entities of at least two groups of entities, the entities of one said group meeting said at least one first selection criterion relative to one of the first entities,
each first vignette of said graph is linked, in said graph, directly to one or more second vignettes, which each represent an entity of said set of entities of rank 1, the number of said second vignettes being dependent on a threshold value determined on the basis of entities of said at least two groups of entities.

9. Data processing method according to Claim 8, wherein the graph contains two first entities, and wherein a first one of the two first entities is an entity of a set of entities that are selected on the basis of said at least one second selection criterion from among a plurality of entities that meet said first selection criterion relative to a second one of the first entities.

10. Data processing method according to Claim 8, wherein the first vignettes form an ordered series of at least three vignettes, among which the first vignette of the series represents a start entity, the last vignette of the series represents an end entity, and at least one intermediate vignette represents an intermediate entity, an intermediate vignette of the series being linked to a preceding vignette and to a following vignette, the preceding vignette representing the start entity or a preceding intermediate entity, and the following vignette representing the end entity or a following intermediate entity, and
wherein an intermediate entity is an entity of a set ENp of entities that is obtained by successive selections on the basis of said at least one second selection criterion from among a plurality of entities that meet said first selection criterion relative to the start entity and/or an entity of a set ENq of entities that is obtained by successive selections on the basis of said at least one second selection criterion from among a plurality of entities that meet said first selection criterion relative to the end entity.

11. Data processing method according to Claim 10, wherein the entities are artists, and the method further includes a step of constructing a list of pieces of music, said list including pieces associated with each entity of the series, respectively.

12. Device (ORD) including:
means (GEN) for generating a control signal for the display, on a screen (ECR), of a graphical interface comprising a graph (GF1) composed of links and of nodes depicted by vignettes, each vignette representing an entity, said graph containing a first vignette (V1) representing a first entity (A1),
a module (SEL) for selecting a set of entities on the basis of at least one second selection criterion from among a plurality of entities that meet a first selection criterion relative to the first entity,
the first vignette of said graph being linked, in said graph, directly to one or more second vignettes that each represent a second entity of said set of entities,
the second criterion being dependent on a current threshold value determined on the basis of the plurality of entities that meet the first criterion, said current threshold value being a value of a predefined quantity, at least one value of said quantity being associated with at least one entity, and said at least one second criterion being a criterion of comparison between a value of said quantity associated with an entity and said current threshold value,
**characterized in that** the graphical interface contains an icon that comprises at least two areas that are selectable by a user, each area being associated with a threshold value, and **in that**, when the user selects one of said at least two areas of the icon, the current threshold value is replaced by the threshold value associated with the selected area, and the selection of said area is followed by the display of a modified graph containing a modified number of said second vignettes.
